# EUROPEAN PATENT SPECIFICATION

(11) **EP 2 340 188 B1**
(45) Date of publication and mention of the grant of the patent: **18.12.2013**
(21) Application number: 09823976.7
(22) Date of filing: 19.08.2009
(51) Int. Cl.: B60R 21/203, B60R 13/00, B60R 21/215, G09F 13/06, G09F 13/22, B60Q 3/02

(54) **METHOD FOR ILLUMINATING COLORS IN A BACKLIT DRIVER AIRBAG EMBLEM**
VERFAHREN ZUR BELEUCHTUNG DER FARBEN IN EINEM RÜCKBELEUCHTETEN FAHRERAIRBAG-EMBLEM
PROCÉDÉ D'ÉCLAIRAGE EN COULEURS DANS UN EMBLÈME RÉTROÉCLAIRÉ DE COUSSIN DE SÉCURITÉ GONFLABLE DE CONDUCTEUR

(30) Priority: 27.10.2008 US 290105; 30.01.2009 US 363372
(43) Date of publication of application: 06.07.2011
(73) Proprietor: Autoliv ASP, Inc., Ogden, UT 84405 (US)
(72) Inventor: PAXTON, Donald, J., Romeo MI 48065 (US); PHILLIPS, Henry, Vernon, Shelby Township MI 48315 (US); MATSU, Richard, L., Plymouth MI 48170 (US)
(74) Representative: Parry, Simon James
(86) International application number: PCT/US2009/054250
(87) International publication number: WO 2010/051090

(56) References cited:
- EP-A1- 1 000 809
- EP-A1- 1 911 630
- JP-A- 2000 118 320
- US-A- 4 443 832
- US-A- 4 665 342
- US-A- 4 684 353
- US-A- 5 339 550
- US-A- 5 558 364
- US-A- 5 734 627
- US-A1- 2007 047 217
- US-A1- 2008 090 031
- US-B1- 6 701 652

## Description

### BACKGROUND OF THE INVENTION

Airbag systems are commonly used on vehicles and especially in steering wheels. These airbags are designed to inflate during an accident to prevent the occupant from harmful impact with the steering wheel during a crash. Accordingly, the airbag system will generally be positioned in the steering wheel.

It is also known that most vehicle manufacturers want to have their logo or trademark on the steering wheel. These logos or trademarks are often colored images and are positioned on the steering wheel (such as on the cover of the steering wheel that is used to cover the airbag system). Some logos may also have a metallic chrome portion for improved appearance. Such positioning of the logo fosters brand recognition and also helps the vehicle occupant to remember that cars made by the vehicle manufacturer have airbags and are thus safer.

In order to further make the company's logo "stand out," some parties have even begun to seek for ways to illuminate the logo/trademark. One example of this type of system is found in International Patent Publication No. WO 2007/084031. However, to date there has not been an acceptable solution to illuminating the colored portion of a trademark in addition to a chrome/metallic portion. Such a solution would provide cosmetic benefits and would be desirable to many consumers.

US5,558,364 discloses a plastic airbag cover having an integrated light source according to the preamble of claim 1.

### BRIEF SUMMARY OF THE INVENTION

An airbag apparatus according to the invention is disclosed by claim 1. Other embodiments are disclosed by the dependent claims. The invention refers further to a method of creating a backlit emblem on a steering wheel cover.

The emblem will be backlit using EL foil. However, the EL foil will include one or more areas of opaque colors that will correspond to the position of the windows on the emblem. In other words, for the areas of the emblem that require opaque colors, the colors will not be added to the emblem, but rather, this opaque color will be added to the EL foil. The consumer will, of course, still see these opaque colors because of the windows in the emblem.

By placing the opaque colors on the EL foil rather than on the emblem, significant advantages may be achieved. Previously, the opaque colors on the emblem were often difficult to make visually appealing because the light from the backlighting source would "bleed" through the opaque color. However, by placing the opaque color on the EL foil, this problem is obviated.

### BRIEF DESCRIPTION OF THE SEVERAL VIEWS OF THE DRAWINGS

In order that the manner in which the above-recited and other features and advantages of the invention are obtained will be readily understood, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 is a front, perspective view of an airbag cover incorporating one exemplary embodiment;

Figure 2 is a rear assembly view of the airbag cover of Figure 1;

Figures 2A and 2B are sketches that illustrate the way in which the emblem and the illumination source may be attached to the cover, wherein Figure 2A shows the apparatus prior to welding and Figure 2B shows the apparatus after the welding step;

Figure 3 is a rear, perspective view of the airbag cover of Figure 2;

Figure 3A is a rear, exploded, perspective view of another exemplary embodiment of an airbag cover;

Figure 3B is a side, exploded, perspective view of the embodiment of Figure 3A;

Figure 3C is a perspective view of an exemplary embodiment of EL foil;

Figure 3D shows a rear perspective of the embodiment of Figure 3A of the cover;

Figure 3E shows an embodiment of the cover of Figure 3A in use on a steering wheel;

Figure 4 is an assembly view of an exemplary embodiment of an emblem that may be used in the assembly of Figure 1;

Figure 5 is a fully assembled view of the emblem of Figure 4;

Figure 6 is an assembly view of another exemplary embodiment of an emblem;

Figure 7 is an assembly view of the backside of another exemplary embodiment of an emblem;

Figure 8 is a frontside view of the emblem of Figure 7 showing an alternative for illuminating the emblem;

Figure 9A is an assembly view of the airbag apparatus showing the inflator;

Figure 9B is a frontside view of the airbag apparatus as assembled;

Figure 9C is a rearside view of the airbag apparatus as assembled;

Figure 10 is a perspective view of the rear side of a steering wheel cover according to the invention;

Figure 11 is an assembly view of the steering wheel cover of Figure 10;

Figure 12 is a perspective view of the front side of the steering wheel cover of Figure 10, the cover being fully assembled; and

Figure 13 is an assembly view of another embodiment of an emblem of the present invention.

### DETAILED DESCRIPTION OF THE INVENTION

The presently preferred embodiments of the present invention will be best understood by reference to the drawings, wherein like parts are designated by like numerals throughout. It will be readily understood that the components of the present invention, as generally described and illustrated in the figures herein, could be arranged and designed in a wide variety of different configurations. Thus, the following more detailed description of the embodiments, as represented in the Figures, is not intended to limit the scope of the invention, as claimed, but is merely representative of presently preferred embodiments of the invention.

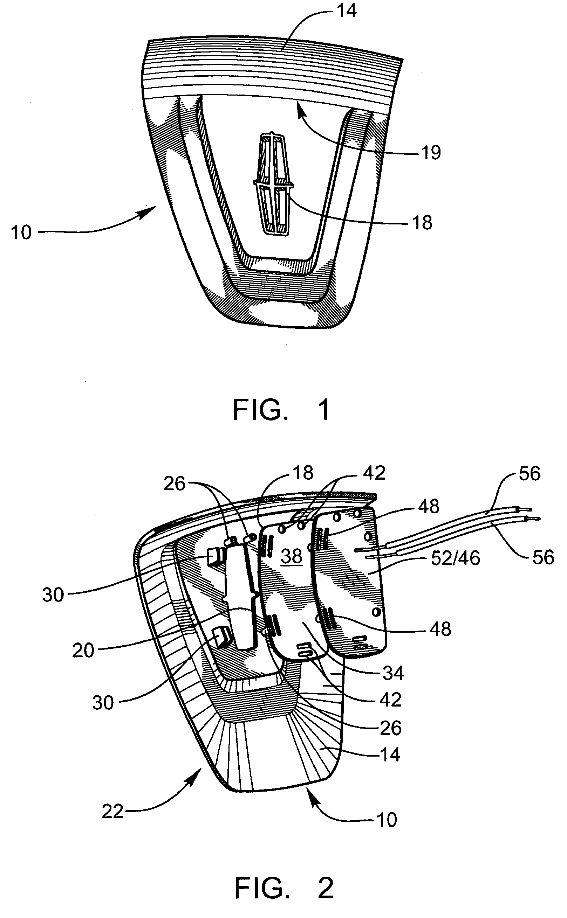

Referring now to Figure 1, an airbag apparatus 10 that incorporates the present embodiments is illustrated. Specifically, the apparatus 10 includes an airbag cover 14 that may be used as part of a steering wheel airbag system. Those skilled in the art would appreciate how the apparatus 10 may be incorporated into the steering wheel. The cover 14 may be used to cover an airbag. In the event of an accident, the airbag will deploy through the cover 14.

The cover 14 includes an emblem 18. For example, the emblem 18 may be a logo or trademark of the vehicle manufacturer. As can be seen in Figure 1, the emblem 18 is generally added to the center of the cover 14. The presence of the emblem 18 signifies to the consumer that the vehicle made by the particular manufacturer includes an airbag system. As will be described in greater detail herein, the emblem 18 may be backlit to illuminate the emblem 18, thereby making the emblem more visually appealing.

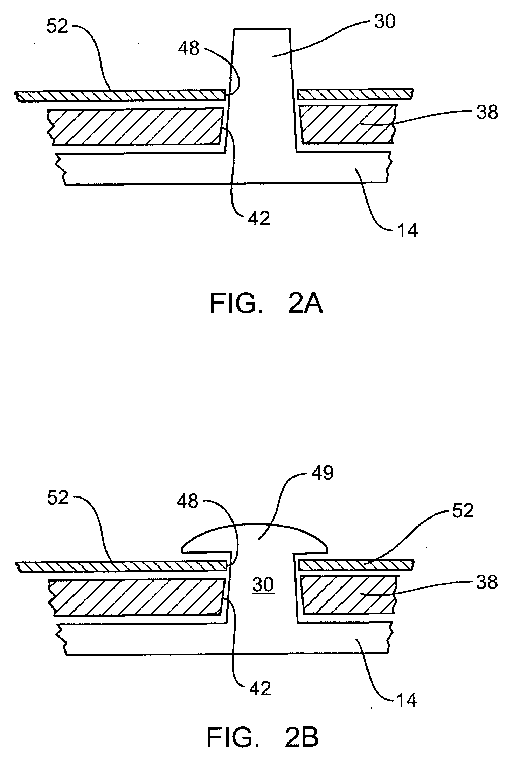

Figure 2 is an assembly view of the rear side 22 of the cover 14. As can be seen in Figure 2, the cover 14 includes an opening 20 into which the emblem 18 will be inserted. The cover's rear side 22 may include one or more studs 26 and/or tabs 30. The emblem is added to a sheet 34 of material. In Figure 2, the rear side 38 of this sheet 34 is visible; the emblem 18 is positioned on the front surface (not visible in Figure 2) such that it will be inserted through and/or fit into the opening 20. The sheet 34 also includes one or more openings 42 that are sized and configured to engage the studs 26 and/or the tabs 30. In other words, the studs 26/tabs 30 will pass through the openings 42. As can be seen in the Figure, the cover may include one or more recesses 19. In fact, four recesses are shown. The cover 14 may include translucent or opaque colors. The translucent or opaque colors are in the four recesses shown. For example, for a "LINCOLN" brand car, the emblem color may be opaque black and for the "CADILLAC" cover, opaque black and translucent colors may be positioned on the inside of the shield in the logo.

The apparatus 10 further includes an illumination source 46 that is positioned rearward of the emblem 18. More specifically, the illumination source 46 is positioned rearward of the sheet 34. Like the sheet 34, the illumination source 46 comprises one or more openings 48 that are sized and configured to engage the studs 26 and/or the tabs 30. In other words, the studs 26/tabs 30 will pass through the openings 48. In this embodiment, the emblem is two-pieces, namely EL foil (shown below) and the sheet 34.

In the embodiment of Figure 2, the illumination source 46 comprises electroluminescent foil 52 ("EL foil"). However, as described herein, other features may be used as the illumination source 46. Leadwires 56 are attached to the foil 52.

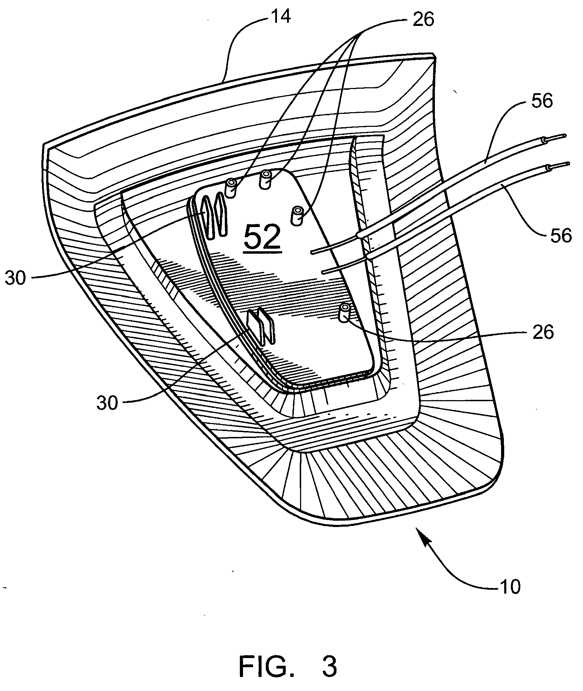

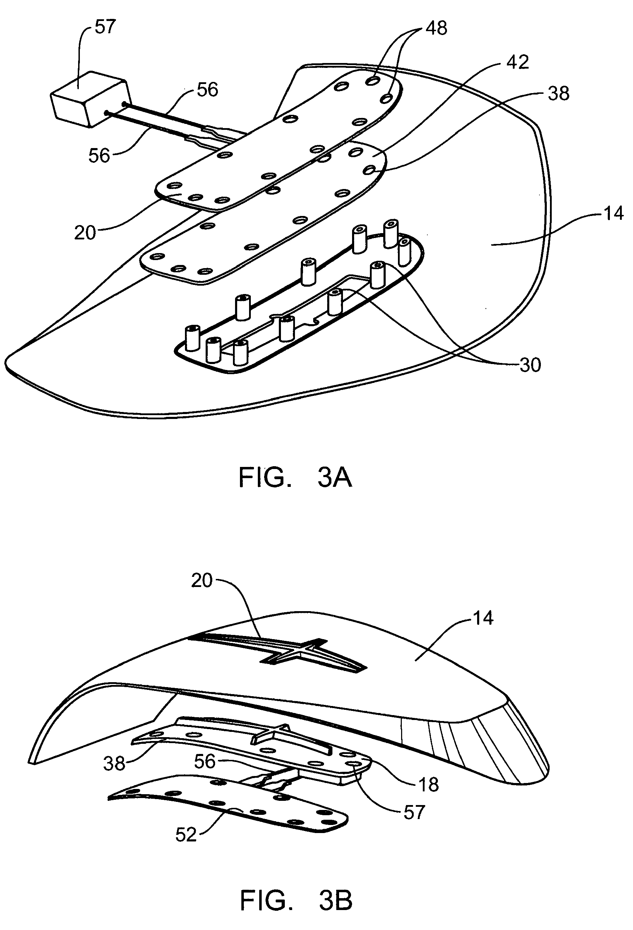

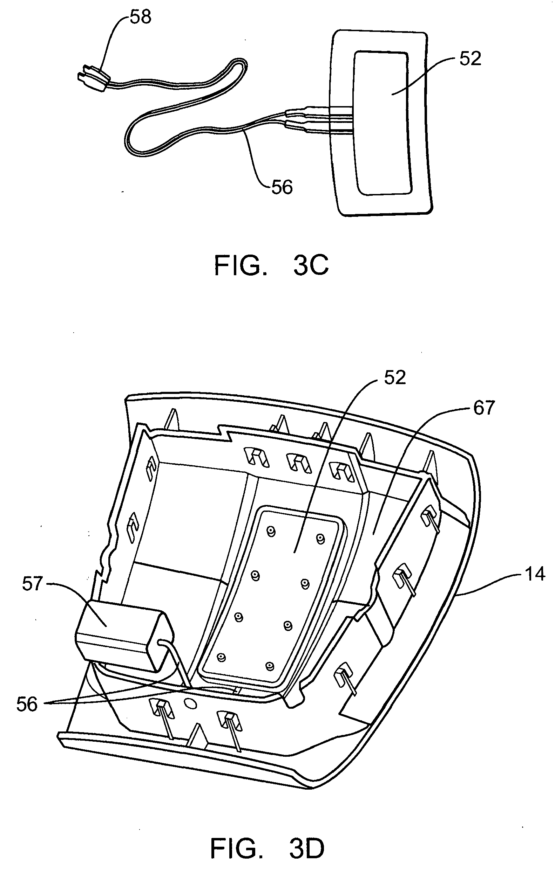

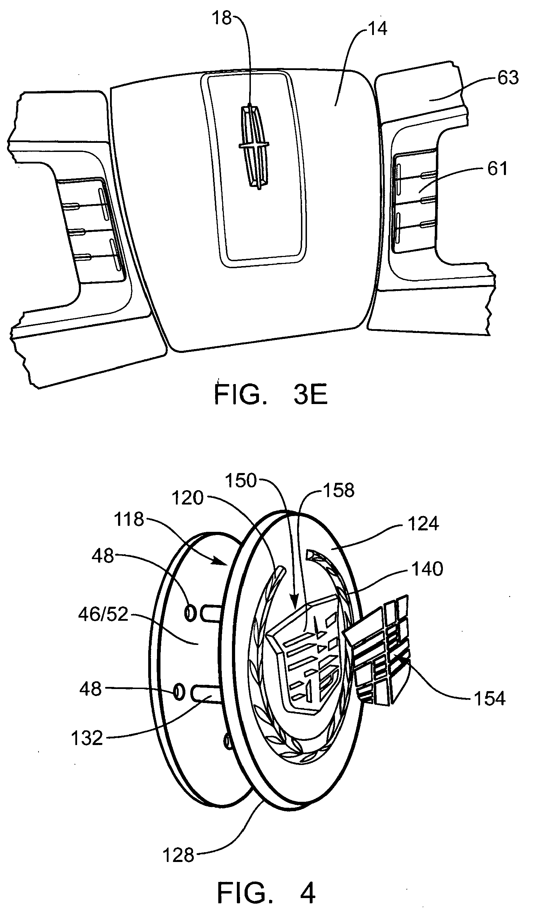

Referring now to Figure 3, a perspective view shows the embodiment of Figure 2 after it has been fully assembled. More specifically, in Figure 3, studs 26 and tabs 30 have been passed through the openings 42 and the openings 48. Once assembled in this manner, the studs 26 and the tabs 30 may be ultrasonically welded over the EL foil 52 to securely attach the apparatus. This welding process is best understood with reference to Figures 2A and 2b taken in conjunction with Figure 3. Figure 2A shows tabs 30 passed through the respective openings 42, 48. In a like manner, the stud 26 (or the studs 132 described below) may similarly be passed through the openings. Once passed through, the tab 30 (or studs 26, 132) may be deformed with heat or other energy such as ultrasonic waves. Such deformation forms the "weld nugget" 49, which is the material that actually retains the emblem and light source 46 (light guide or EL foil 52). The weld "nugget" 49 is the material that is upset when the end of the attachment stud 26 or 132 or tab 30 is heated or deformed to secure the stud. Of course, other types of welding or attachment of the tab 30 may be used.

It should also be noted that a leadwire 56 may be attached to the EL foil 52. (The other end of the leadwire 56 will be attached as known in the art to allow for illumination of the emblem). Those of skill in the art would appreciate how and where this attachment of the leadwire 56 may be accomplished. In some embodiments, the leadwire 56 may be clipped into place either to the cover wall (such as the chute wall) or to the airbag module housing (or to other locations as desired). Such retaining the of the lead wire is shown in Figure 3D. Basically, the leadwire needs to be routed from the emblem light source 52 to the outside of the airbag module. In this case the leadwire from the light source could route through the chute wall, clip onto the chute wall, or go inside the chute wall and snake its way out of the inside of the cover so that it may be connected to its power source. After the leadwire 56 has been connected between the EL foil 52 and power source, the EL foil 52 may provide backlight to illuminate the emblem 18.

Figures 3A and 3B shows another embodiment of the way in which the cover 14 may be illuminated. Specifically, Figures 3A and 3B shows EL foil 52 connected to wires 56 as well as a power source 57 (which may be a light source). The source 57 operates to illuminate the foil 52. The cover 14 includes posts 30 that fit through openings 42 and openings 48 as a means of securing the EL foil 52 and the emblem 38 to the cover.

Figure 3C shows a perspective view of EL foil 52 that may be used in the present embodiments. The EL foil 52 includes only a single wire 56 and an attacher 58 that is capable of attaching to a source 57 (not shown in Figure 3B).

Figure 3D shows a rear, perspective of the cover of Figure 3A. This cover includes one or more walls 67 (which are sometimes referred to as "chute walls"). Also, in this embodiment, the wire 56 has been routed and stowed "out of the way" so that it is not dangling or getting in the way during airbag deployment or installation. One or more features, as known in the art, may be used to retain and hold the wire 56.

Figure 3E shows a frontal view of the embodiment of the cover 14 in use on a steering wheel 63. As shown in Figure 3E, the cover 14 may be at or proximate the center of the wheel. One or more buttons (or switches) 61 may be used as part of the steering wheel 63.

The way in which the emblem 18 may be formed will now be explained in greater detail. Specifically, Figure 4 shows an assembly view of embodiment of how an emblem 118 may be made. This emblem 118 may then be used in the apparatus 10 shown above, as desired. By way of example, the emblem 118 is the "CADILLAC" logo that is commonly used on a certain type of vehicle.

The emblem 118 includes a front surface 124 and a rear surface 128. One or more mounting studs 132 protrude rearward from the rear surface 128. The mounting studs 132 may then be used to secure the emblem to the airbag cover. In the embodiment shown in Figures 1-3, the studs 32 were part of the cover 14 and openings 42 that receive the studs 32 were added to the sheet 34. In the embodiment of Figure 4, the studs 132 are added to the emblem 118 and the corresponding openings 42 are on the cover (not shown). Of course, those skilled in the art will appreciate how each of these embodiments may be implemented.

The emblem 118 may also be used in conjunction with an illumination source 46. Again, in the embodiment of Figure 4, this illumination source 46 comprises EL foil 52. The foil 52 may include openings 48 that receive the studs 132 and operate to connect the foil 52 to the emblem 118. Further ultrasonic welding may also be used to further secure the foil 52 as desired. The leadwire 56 (not shown in Figure 4), may also be connected to the foil 52, as needed in order to allow the foil 52 to provide backlight illumination for the emblem 118.

The emblem 118 may be formed from molded, clear or tinted plastic materials. Such materials are currently used and are known to those in the industry. Some emblems 118 may have raised or recessed (i.e., three-dimensional) features. Such features may be formed during the molding process.

One of the features of the emblem 118 is that it has a chrome portion 140. This chrome portion 140 is a metallic or chrome section. As shown in Figure 4, some logos or emblems have a metal or chrome portion as part of their overall design. If such a chrome portion 140 is required, this portion 140 is added to the front surface 124 so that it is visible to the user. The front surface 124 may also be painted black or dark, as having a black/dark background is a common feature of many emblems 118. Any other color may be selected as desired. Similarly, the emblem 118 may simply be molded out of the appropriate color as a means of providing the color for the front surface 124.

The emblem 118 may also include an emblem outline 150 and one or more color plaques 154. The emblem outline 150 may be added to the front surface 124. The outline 150 includes one or more pockets 158 into which the color plaques 154 may be added. The color plaques 154 may be small plaques of translucent colored plastic made from a variety of different materials, including various blends of acrylic or polycarbonate materials. Those skilled in the art would appreciate the materials that may be used. The color plaques 154 would provide crisp delineation between the color and the chrome portion 140 of the emblem.

It should also be noted that, in other embodiments, the plaques 154 comprise a colored liquid, such as a polyurethane resin or an acrylic resin. This liquid would be added/poured into the pockets 158 and allowed to harden within the pockets 158. Clearly, the arrangement of the colored plaques 154 depends upon the configuration and shape of the emblem 118 and the colors needed to form the emblem 118.

Regardless of the method selected of introducing the color plaques 154 into the pockets 158, the emblem 118 (and more specifically, the front surface 124, the outline 150, and/or the chrome portion 140) may have a PVD vacuum metalized chrome finish 120, along with a protective coating applied. Those skilled in the art are familiar with such "finishing" and "protecting" techniques. Such techniques may be performed either prior to or after the time that the color plaques 154 are added to the pockets 158. This finish is translucent and any light provided by the foil 52 will pass through the finish and illuminate the colored plaques 154 in the pockets 158.

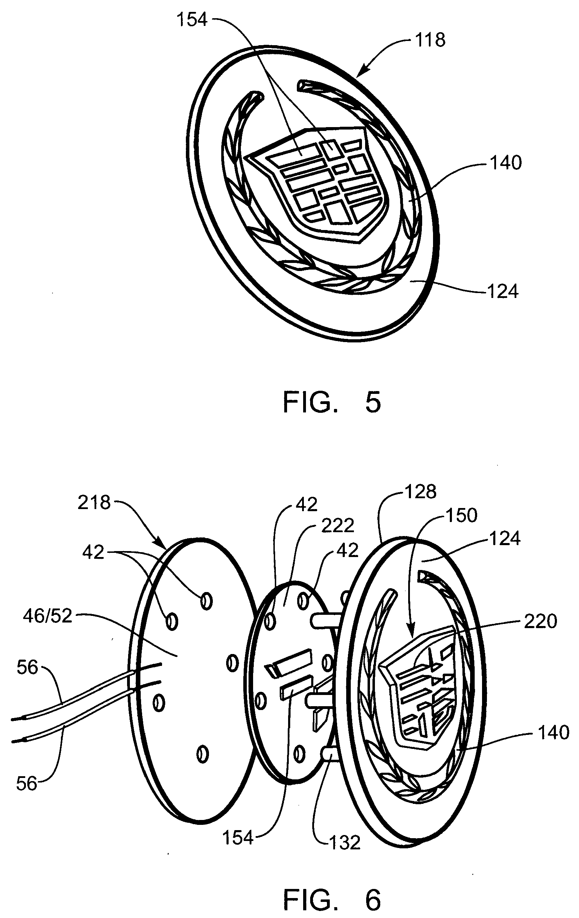

Referring now to Figure 5, the embodiment of the emblem 118 is illustrated in its fully assembled, fully finished state. This emblem may then be attached to and used as part of an airbag apparatus, as discussed above. The emblem 118 could then be illuminated via the illumination source 46 (not shown in Figure 5). As described above, this illumination source 46 could be the EL foil 52 (not shown in Figure 5) or, as described in the patent publication discussed above, could be a light guide illuminated by an LED. Because the colored plaques 154 (or plaque inserts) and the finish applied to the emblem 118 are translucent, the illumination provided by the source 46 will illuminate the plaques 154 and the chrome portion 140 (which may be translucent), thereby creating a visually appealing emblem 118. The translucent chrome 140 may be around all recessed color plaques, as shown in this drawings.

Referring now to Figure 6, another embodiment of an emblem 218 is illustrated. The emblem 218 is similar to the embodiments discussed above. Accordingly, for purposes of brevity, this discussion will not be repeated.

In the embodiment of Figure 6, the emblem 218 includes a front surface 124 and a rear surface 128. Again, the front surface 124 may be painted black or otherwise configured to have a dark color. However, in this embodiment, the emblem outline 150 is added to the front surface 124. However, there are openings 220 (sometimes referred to a "holes") in the emblem 218 that correspond to where the color should align for the emblem 218.

Positioned behind the rear surface 128 is a back plate 222. The back plate 222 comprises a portion of the emblem 218. The back plate 222 is made of a similar transparent material that is used to make the emblem 218. The back plate 222 includes the color plaques 154. However, in this case, the color plaques 154 are raised, platform-like areas molded onto or attached to the back plate 222. The raised color plaques 154 are then inserted through the holes 220 of the front surface 124. The raised color plaques 154 could easily be colored using known techniques such as painting or pad printing. (In other words, the back plate may have raised color platforms to insert into emblem hole 220). When inserted through the holes 220, the color plaques 154 provide a crisp delineation between the chrome portion 140 and the colored portion of the emblem 218. Windows or openings 220 go through the surface 124 to allow colors of the raised platforms of the inserts to show through.

As shown in Figure 6, the illumination source 46, which may be EL foil 52, may be positioned behind the back plate 222 (and attached via the studs 132 discussed above). Wires 56 are shown attached to the EL foil 52. When fully assembled, the emblem 218 will have the same or similar appearance to that which is shown in Figure 5. This emblem 218 may then be illuminated by the source 46, providing a visually appealing design. However, unlike some of the other embodiments described herein, the emblem 218 is illuminated without translucent chrome behind the color (or colored plaques).

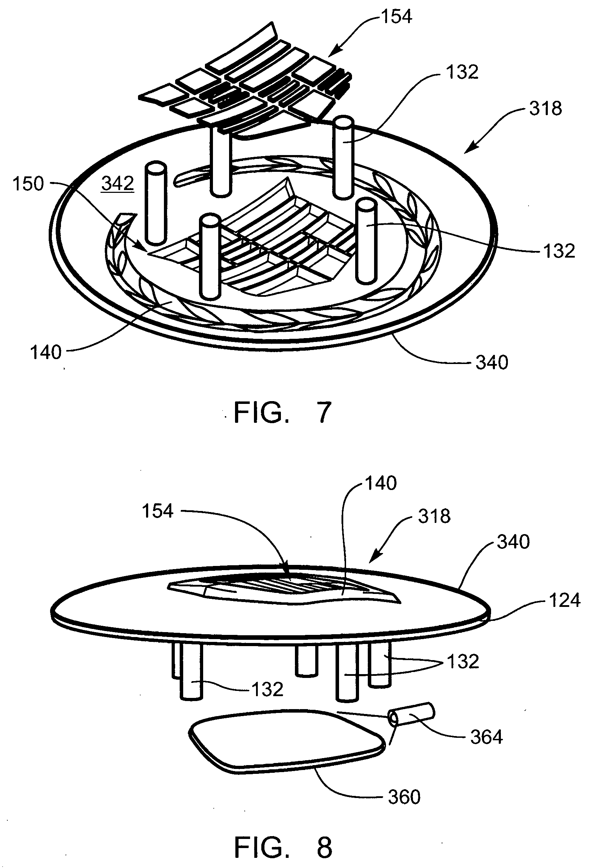

Referring now to Figure 7, an assembly view illustrates another embodiment of an emblem 318 according to the present embodiments. The emblem 318 is similar to the embodiments discussed above. Accordingly, for purposes of brevity, this discussion will not be repeated.

In the embodiment of Figure 7, the emblem 318 includes a clear dome 340. An emblem inverse image of the emblem geometry is embossed, engraved, molded or otherwise formed into the back side of the clear dome of the emblem 318-appearing as the normal image through the clear dome. The raised, three-dimensional features of the emblem 318 are positioned underneath the dome 340. In some embodiments, the dome 340 may be made of the same materials used to make other portions of the emblem 318. In other embodiments, the dome may be made of a crystal material and in yet further embodiments, may be a "crystal clear" dome. On the back side of the dome 340 is the emblem outline 150 and the color plaques 154. The outline 150 may be machined or otherwise formed into the back side 342 of the dome 340. The outline 150 may include individualized "pockets" for receiving the plaques 154. The plaques 154, when added to the outline 150, appear as raised platform-type areas on the back side 342 of the emblem 318. The color plaques 154 could easily be added using methods such as pad printing or painting. Figure 8 shows the fully assembled emblem 318.

This method of forming the emblem 318 according to Figures 7 and 8 may be advantageous because the chrome portion 140 would be protected from scratching and marring by the dome 340. It should also be noted that the black portion (dark portion) of the front surface 124 could be insert molded into the dome 340. Although not strictly necessary, such molding may be desirable to hide the posts (studs) 132 on the back of the emblem 318. One or more holes 42 may be added to receive the studs 132.

It should be noted that, in the embodiment shown in Figure 8, the illumination source comprises a light guide 360 illuminated by an LED 364. (These features are represented graphically by boxes). Again, those skilled in the art will appreciate that this type of illumination source is taught in the patent publication cited above. Of course, other types of structures capable of illuminating (backlighting) the emblem may be used as the illumination source.

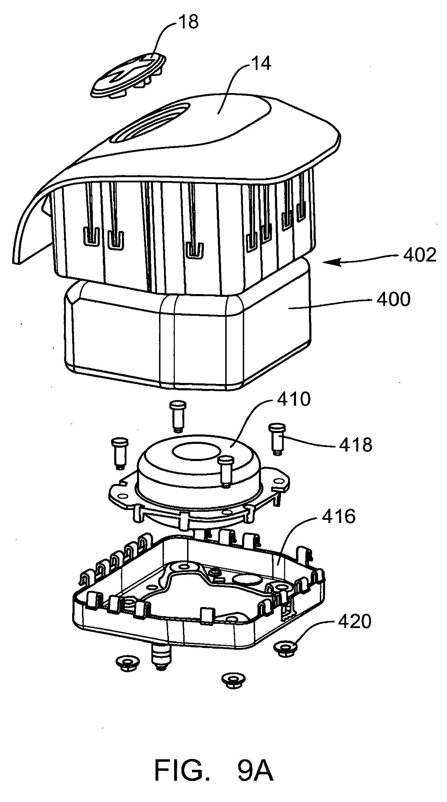

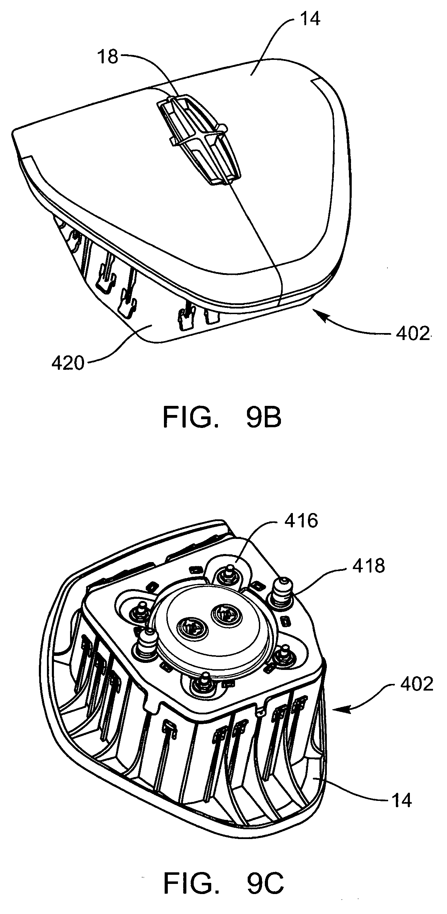

It should be noted that the above-described embodiments of airbag covers are designed for drivers' airbag system. An example of this airbag system 402 is shown in Figures 9A, 9B, and 9C. The system 402 includes the cover 14 (or any of the other airbag covers described herein). The system 402 includes an airbag 400 and an inflator 410 capable of inflating and deploying the airbag 400 during a crash. A retainer 416 is positioned below the inflator. Fasteners 418 and nuts 420 may be used to secure the retainer 415 to the inflator 410 and/or the airbag 400. Those skilled in the art will readily appreciate how this embodiment may be constructed, as well as other embodiments of an airbag system 402 that may incorporate the cover 14.

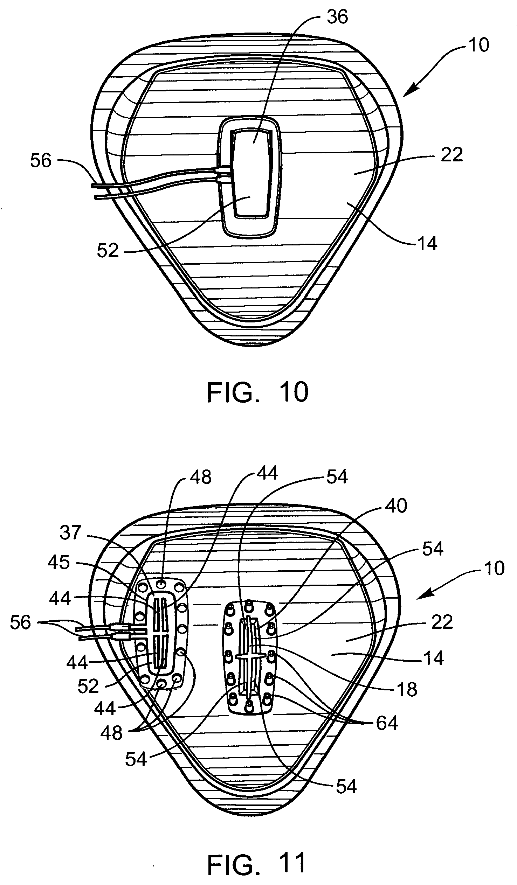

Referring now to Figure 10, an airbag apparatus 10 according to invention is shown. The airbag apparatus 10 is part of an airbag module that includes the airbag cover 14. As known in the art, the cover 14 will be positioned as part of the steering wheel (or at other portions of the vehicle) and will have a front surface (not shown in Figure 1) that has a visually appealing appearance. The rear side 22 of the cover 14 is visible in Figure 10. During an accident or crash, an airbag will deploy through the cover 14 into the vehicle interior.

Specifically, as noted above, it is often desirable to place an emblem 18 (shown in Figure 11) of the vehicle manufacturer on the airbag cover 14. (The emblem may be any trademark, symbol, or logo of the vehicle manufacturer.)

In some embodiments, it may be desirable to illuminate the emblem 18 in order to give it more visual appeal. Accordingly, one or more lead wires 56 may be attached to EL foil 52 (not shown in Figure 10) to provide illumination to the emblem 18. Of course, the wires 56 will be positioned behind the cover 14, dashboard or other class A surfaces of the vehicle such that they are not visible to the vehicle occupant.

Figure 10 shows the rearward side 22 of the cover 14 (*i.e.*, the side of the cover 14 that will be hidden from the occupant when the apparatus 10 and the cover 14 are installed on the vehicle). Figure 11 also shows the EL foil 52 that is connected to the wires 56. The EL foil 52 is positioned directly rearward of the emblem 18 (not shown in Figure 10). The EL foil 52 provides illumination/light such that the emblem 18 becomes illuminated and lighted to the vehicle occupant's eye. The rear side 36 of the EL foil 52 is shown in Figure 10.

Figure 11 is an assembly view that shows how the apparatus 10 may be constructed. In Figure 11, the front side 37 of the EL foil 52 is shown for clarity. Of course, when the EL foil 52 is installed, it will be installed as indicated in Figure 10 in which the front face 37 of the EL foil 52 is adjacent the rear surface 40 of the emblem 18.

The EL foil 52 shown in Figure 11 comprises one or more opaque colors 44. The opaque colors 44 are dark colors (such as black, dark blue, dark green, etc.) that are associated or used as part of the emblem 18. These opaque colors 44 may be screen printed, pad printed, painted, etc. to the EL foil 52, such as on the front surface 37. The opaque colors 44 may be printed on the foil 52 in the same process that the EL layers are printed. Because screen printing or pad printing is very rapid, several layers can be applied in rapid succession to the EL foil 52 until the colors are completely opaque. Moreover, plastic lamination 45 that is on the outside of the EL foil 52 protects the opaque colors 44 from scratches. Accordingly, the opaque colors 44 are disposed between the EL foil 52 and the lamination 45.

As shown in Figure 11, the emblem 18 may also include one or more windows 54. The windows 54 are openings, transparent or translucent areas in the emblem 18. The position of the windows 54 is designed to correspond to and align with the position of the opaque colors 44. Thus, as the opaque colors 44 are rectangular in shape in Figure 11, the windows 54 have a similar shape. Of course, other shapes/configurations may also be used, depending upon the shape/configuration and color scheme of the emblem 18. Accordingly, when the EL foil 52 is properly positioned, the opaque colors 44 will be visible through the windows 54. Thus, the opaque colors 44 which are part of the emblem 18, are positioned on the EL foil 52 rather than on the emblem 18 (or a portion of the emblem 18).

The EL foil 52 may also include one or more openings 48 which are positioned to align with corresponding poles 64 protruding from the rear side 22 of cover 14. Thus, the EL foil 52 will be held in its proper position by the poles 64 engaging and/or passing through the openings 48.

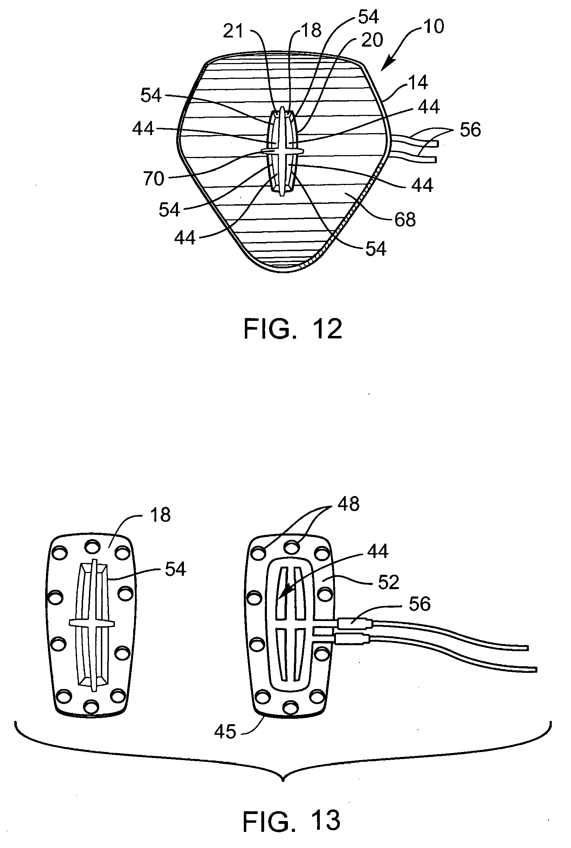

Figure 12 shows the fully assembled apparatus 10 as it has been positioned in the airbag cover 14. As can be seen in Figure 12, the front surface 68 of the airbag cover 14 is a class A surface that is visually appealing. The emblem 18 is designed to fit into the opening 20 in the front surface 68 of the cover 14 such that the front surface 70 of the emblem 18 is visible. Those skilled in the art will appreciate how this may be accomplished and will appreciate the variety of different methods that may be used to position or attach the emblem 18.

In the embodiment shown in Figure 12, the emblem 18 may be a chrome emblem 21. Other materials may also be used to construct the emblem 18 as desired. In other words, the areas of the emblem 18 other than the windows 54 are all made of translucent chrome that will allow light to bleed through these areas. One or more colors may also be added to the emblem 18 as desired.

Referring now to Figures 10-12 collectively, it will be readily apparent that the emblem 18 positioned within the cover 14 may be illuminated (backlit) by the EL foil 52, thereby giving the emblem 18 an attractive visual appearance. Moreover, the opaque colors 44 that are associated with the emblem 18 are positioned on the EL foil 52 and are visible through windows 54 on the emblem 18. By having the opaque colors 44 on the EL foil 52, the light produced by the foil 52 will not bleed through the colors, as occurs on other backlit emblems. Moreover, this reduction of the light bleeding through the opaque colors is achieved without the requirement for multiple coats of paint or difficult painting steps. In painting, single coats of paint often look fine when added to the EL foil 52. Multiple coats of paint may also be used. This process also avoids the hassles of painting crevices, recesses etc. in the emblem, which are areas of the emblem that are often difficult to mask and paint properly. All such problems are obviated by the present embodiments. Likewise, there is no need for an additional component of the emblem that would contain the opaque colors, thereby reducing the cost and complexity of the emblem 18. Accordingly, significant advances may be achieved by the present embodiments.

Figure 13 represents an additional embodiment of the emblem 18 that may be used in the apparatus 10 discussed above. For purposes of clarity, the emblem 18 is shown with EL foil 52. The front face 37 of the EL foil 52 includes the opaque colors 44 and wires 56 are added to the EL foil 52. Openings 48 are also positioned on the EL foil 52 as well as the plastic lamination 45 which shields and protects the opaque colors 44.

The emblem 18 differs from that which is shown in the other embodiments in that the emblem 18 is not made of chrome. Rather, the emblem 18 is made of a plastic material. Of course, the emblem 18 still comprises windows 54 that align with the opaque colors 44 in the manner described herein when the posts 64 engage the openings 48 for proper alignment.

## Claims

1. An airbag apparatus comprising:
an emblem (18);
EL foil (52) positioned rearward of the emblem (18), the EL foil (52) capable of illuminating the emblem (18);
the airbag apparatus being **characterized by** the emblem (18) comprising one or more windows (54); and
by one or more opaque colors (44) added to the EL foil (52), the opaque colors (44) having a similar shape to the windows and being aligned with and visible through the windows (54).

2. An apparatus as in claim 1 wherein the opaque colors (44) are screen printed on the EL foil (52).

3. An apparatus as in claim 1 or claim 2 further comprising plastic lamination (45) on the outside of the EL foil (52), the opaque colors (44) being disposed between the EL foil (52) and the lamination (45).

4. An apparatus as in any preceding claims wherein the emblem (18) is a chrome emblem.

5. An apparatus as in any preceding claims wherein the emblem (18) is added to an airbag cover (14).

6. An apparatus as in any preceding claims wherein the emblem (18) comprises poles (64) and the EL foil (52) comprises openings (48), wherein the poles (64) pass through the openings (48) to attach the EL foil (52) to the emblem (18).

7. An apparatus as in any preceding claims wherein the opaque colors (44) are added to the front surface of the EL foil (52).

8. A method for creating a backlit emblem (18) on a steering wheel cover (14) comprising:
obtaining a vehicle emblem (18); and
obtaining EL foil (52) that is capable of illuminating the emblem (18);
positioning the EL foil (52) rearward of the emblem (18) the method being **characterized by** providing the emblem (18) with one or more windows (54);
providing the EL foil (52) with one or more opaque colors (44) of similar shape to the windows (54); and
aligning the opaque colors (44) with the windows (54) such that the opaque colors (44) are visible through the windows (54).

9. A method as in claim 8 further comprising the step of screen printing the opaque colors (44) on the EL foil (52).

10. A method as in claim 8 or claim 9 further comprising the step of adding plastic lamination (45) on the outside of the EL foil (52) such that the opaque colors (44) are disposed between the EL foil (52) and the lamination (45).

## Patentansprüche

1. Airbagvorrichtung, umfassend:
ein Emblem (18);
EL-Folie (52), die hinter dem Emblem (18) platziert ist, wobei die EL-Folie (52) in der Lage ist, das Emblem (18) zu beleuchten;
wobei die Airbagvorrichtung **dadurch gekennzeichnet ist, dass** das Emblem (18) ein oder mehrere Fenster (54) umfasst; und
dadurch, dass die EL-Folie (52) mit einer oder mehreren lichtundurchlässigen Farbe(n) (44) versehen ist, wobei die lichtundurchlässigen Farben (44) eine ähnliche Form wie die Fenster aufweisen und nach den Fenstern (54) ausgerichtet und durch sie hindurch sichtbar sind.

2. Vorrichtung nach Anspruch 1, wobei die lichtundurchlässigen Farben (44) per Siebdruck auf die EL-Folie (52) aufgebracht sind.

3. Vorrichtung nach Anspruch 1 oder Anspruch 2, ferner umfassend eine Kunststoffschicht (45) auf der Außenseite der EL-Folie (52), wobei die lichtundurchlässigen Farben (44) zwischen der EL-Folie (52) und der Schicht (45) angeordnet sind.

4. Vorrichtung nach beliebigen vorhergehenden Ansprüchen, wobei das Emblem (18) ein Chrom-Emblem ist.

5. Vorrichtung nach beliebigen vorhergehenden Ansprüchen, wobei das Emblem (18) an eine Airbagabdeckung (14) angefügt ist.

6. Vorrichtung nach beliebigen vorhergehenden Ansprüchen, wobei das Emblem (18) Stangen (64) umfasst und die EL-Folie (52) Öffnungen (48) umfasst, wobei die Stangen (64) durch die Öffnungen (48) verlaufen, um die EL-Folie (52) an dem Emblem (18) zu befestigen.

7. Vorrichtung nach beliebigen vorhergehenden Ansprüchen, wobei die Vorderseite der EL-Folie (52) mit den lichtundurchlässigen Farben (44) versehen ist.

8. Verfahren zum Bilden eines hintergrundbeleuchteten Emblems (18) an einer Lenkradabdeckung (14), umfassend:
Erhalten eines Fahrzeugemblems (18); und
Erhalten von EL-Folie (52), die in der Lage ist, das Emblem (18) zu beleuchten;
Platzieren der EL-Folie (52) hinter dem Emblem (18), wobei das Verfahren **gekennzeichnet ist durch** das Versehen des Emblems (18) mit einem oder mehreren Fenster(n) (54);
Versehen der EL-Folie (52) mit einer oder mehreren lichtundurchlässigen Farbe(n) (44) mit einer ähnlichen Form wie die Fenster (54); und
Ausrichten der lichtundurchlässigen Farben (44) nach den Fenstern (54), sodass die lichtundurchlässigen Farben (44) **durch** die Fenster (54) hindurch sichtbar sind.

9. Verfahren nach Anspruch 8, ferner umfassend den Schritt des Aufbringens der lichtundurchlässigen Farben (44) auf die EL-Folie (52) per Siebdruck.

10. Verfahren nach Anspruch 8 oder Anspruch 9, ferner umfassend den Schritt des Hinzufügens einer Kunststoffschicht (45) auf der Außenseite der EL-Folie (52), sodass die lichtundurchlässigen Farben (44) zwischen der EL-Folie (52) und der Schicht (45) angeordnet sind.

## Revendications

1. Appareil de coussin de sécurité gonflable comprenant :
un emblème (18) ;
une feuille EL (52) positionnée à l'arrière de l'emblème (18), la feuille EL (52) étant capable d'éclairer l'emblème (18) ;
l'appareil de coussin de sécurité gonflable étant **caractérisé en ce que** l'emblème (18) comprend une ou plusieurs fenêtres (54) ; et
par une ou plusieurs couleurs opaques (44) ajoutées sur la feuille EL (52), les couleurs opaques (44) présentant une forme similaire à celle des fenêtres et étant alignées avec et visibles à travers les fenêtres (54).

2. Appareil selon la revendication 1, dans lequel les couleurs opaques (44) sont sérigraphiées sur la feuille EL (52).

3. Appareil selon la revendication 1 ou la revendication 2, comprenant en outre une couche de plastification (45) sur l'extérieur de la feuille EL (52), les couleurs opaques (44) étant disposées entre la feuille EL (52) et la couche de plastification (45).

4. Appareil selon de quelconques revendications précédentes, dans lequel l'emblème (18) est un emblème en chrome.

5. Appareil selon de quelconques revendications précédentes, dans lequel l'emblème (18) est ajouté à un couvercle (14) de coussin de sécurité gonflable.

6. Appareil selon de quelconques revendications précédentes, dans lequel l'emblème (18) comprend des tiges (64) et la feuille EL (52) comprend des ouvertures (48), les tiges (64) passant à travers les ouvertures (48) pour relier la feuille EL (52) à l'emblème (18).

7. Appareil selon de quelconques revendications précédentes, dans lequel les couleurs opaques (44) sont ajoutées sur la surface avant de la feuille EL (52).

8. Procédé de création d'un emblème rétroéclairé (18) sur un couvercle de volant (14) comprenant :
obtenir un emblème de véhicule (18) ; et
obtenir une feuille EL (52) qui est capable d'éclairer l'emblème (18) ;
positionner la feuille EL (52) à l'arrière de l'emblème (18), le procédé étant **caractérisé par** le fait de munir l'emblème (18) d'une ou de plusieurs fenêtres (54) ;
munir la feuille EL (52) d'une ou de plusieurs couleurs opaques (44) de forme similaire à celle des fenêtres (54) ; et
aligner les couleurs opaques (44) avec les fenêtres (54) de sorte que les couleurs opaques (44) sont visibles à travers les fenêtres (54).

9. Procédé selon la revendication 8, comprenant en outre l'étape consistant à sérigraphier les couleurs opaques (44) sur la feuille EL (52).

10. Procédé selon la revendication 8 ou la revendication 9, comprenant en outre l'étape consistant à ajouter une couche de plastification (45) sur l'extérieur de la feuille EL (52) de sorte que les couleurs opaques (44) sont disposées entre la feuille EL (52) et la couche de plastification (45).
